(19) **Europäisches Patentamt**
**European Patent Office**
**Office européen des brevets**

(11) **EP 4 450 571 A1**

(12) **EUROPEAN PATENT APPLICATION**
published in accordance with Art. 153(4) EPC

(43) Date of publication:
**23.10.2024 Bulletin 2024/43**

(21) Application number: **22907343.2**

(22) Date of filing: **08.12.2022**

(51) International Patent Classification (IPC):
***C09D 11/322*** *(2014.01)* ***B41M 5/00*** *(2006.01)*
***B41J 2/01*** *(2006.01)*

(52) Cooperative Patent Classification (CPC):
**B41J 2/01; B41M 5/00; C09D 11/322**

(86) International application number:
**PCT/JP2022/045244**

(87) International publication number:
**WO 2023/112816 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021 JP 2021202022**

(71) Applicant: **Nippon Kayaku Kabushiki Kaisha
Tokyo 100-0005 (JP)**

(72) Inventor: **ISHII Toru
Tokyo 115-8588 (JP)**

(74) Representative: **Maiwald GmbH
Elisenhof
Elisenstraße 3
80335 München (DE)**

(54) **INK COMPOSITION AND INKJET RECORDING METHOD**

(57) Provided is an ink composition containing a colorant, a specific solvent component composed of at least one organic solvent having a ClogP value of more than 0.504 and less than 2.635, and water, in which a weighted average value obtained by weighting the ClogP value of each organic solvent constituting the specific solvent component by content on mass basis of each organic solvent and averaging the weighted ClogP values is more than 0.67 and less than 1.26. An ink composition set including the ink composition, and an inkjet recording method using the ink composition are also provided.

**Description**

TECHNICAL FIELD

The present invention relates to an ink composition and an inkjet recording method using the ink composition.

BACKGROUND ART

A recording method with an inkjet printer (inkjet recording method) is a method in which small droplets of ink are emitted from a printer and adhere to a printing medium such as a piece of paper to achieve printing. This recording method has rapidly become popular in recent years due to ease of size reduction and increase in throughput. The inkjet recording method has recently expanded in application to industrial use as well, and techniques for printing on packaging materials or advertising media by the inkjet recording method have been explored. Examples of the packaging materials include cardboard sheets or cardboard boxes in which a corrugated paperboard is sandwiched between two paperboards and bonded therebetween, and coated cardboards having surfaces coated for decorative purposes. Examples of the advertising media include less ink-absorbent printing media such as coated paper in which a paper substrate has a surface coated with a white pigment or the like in order to impart glossiness and whiteness to the paper substrate.

In printing on a surface of a printing medium by the inkjet recording technique, it is often required to provide a printing gap of 1 mm or more, preferably 2 mm or more, and more preferably 3 mm or more, between the surface of the printing medium and an inkjet head in order to prevent contact of the surface of the printing medium with the inkjet head due to warpage or the like of the printing medium.

However, a large printing gap leads to long distances along paths on which ink droplets ejected from an ink ejection port of the inkjet head travel to their landing points on the surface of the printing medium, and thus curving trajectories and satellites of the ink droplets are likely to occur excessively. In particular, when a surface-coated, less ink-absorbent printing medium such as coated cardboards or coated paper is used, the ink droplets may be insufficiently spread on the surface of the printing medium (in other words, their dot diameters are smaller), which may lead to defects such as generation of streaks in a printed matter. Thus, there is strong market demand for an ink that enables printing with large dot diameters regardless of the size of the printing gap.

In this regard, Patent Document 1 discloses an ink composition containing a specific alkali-soluble resin, a polyolefin resin emulsion, and an acetylenediol surfactant.

Patent Document 2 discloses an ink composition containing a binder resin, a compound having a urea bond, a colorant, water as an aqueous medium, and an organic solvent. Patent Document 3 discloses a method of manufacturing a printed matter in which when ink droplets land on a substrate, the substrate temperature is in the range of 40 to 80°C.

Citation List

Patent Document

Patent Document 1: Japanese Patent No. 6640951
Patent Document 2: Japanese Patent No. 6504423
Patent Document 3: PCT International Publication No. WO 2020/054567

DISCLOSURE OF THE INVENTION

Problems to be Solved by the Invention

It is an object of the present invention to provide an ink composition enabling a favorable printed matter with large dot diameters to be obtained regardless of the size of a printing gap, and an inkjet recording method using the ink composition.

Means for Solving the Problems

Specific means for solving the aforementioned problems include the following embodiments.

1) An ink composition comprises a colorant, a specific solvent component composed of at least one organic solvent having a ClogP value of more than 0.504 and less than 2.635, and water,

wherein a weighted average value obtained by weighting the ClogP value of each organic solvent constituting the specific solvent component by content on mass basis of each organic solvent and averaging the weighted ClogP values is more than 0.67 and less than 1.26.

2) In the ink composition according to 1) above, the colorant comprises a pigment.

3) In the ink composition according to 1) or 2) above, the content of the colorant is 0.5 to 30.0% by mass based on the total mass of the ink composition.

4) An ink composition set comprises the ink composition according to any one of 1) to 3) above, and an additional ink composition different from the ink composition.

5) An inkjet recording method, comprising ejecting droplets of the ink composition according to any one of 1) to 3) above, and attaching the droplets to a printing medium to form an image.

6) In the inkjet recording method according to 5) above, the printing medium comprises at least one selected from the group consisting of cardboard, liner paper, coated cardboard, and coated paper.

7) In the inkjet recording method according to 5) above, the printing medium is a less ink-absorbent or non-ink-absorbent printing medium.

Effects of the Invention

The present invention can provide an ink composition enabling a favorable printed matter with large dot diameters to be obtained regardless of the size of a printing gap, and an inkjet recording method using the ink composition.

PREFERRED MODE FOR CARRYING OUT THE INVENTION

Hereinafter, specific embodiments to which the present invention is applied will be described in detail. In this specification, when a unit is described along with only one of the upper and lower limits of a range, such as "X to Y% by mass", it means that the units of the upper and lower limits of the range are the same, i.e., "X% by mass to Y% by mass", or the like. Further, in this specification, "C.I." means "color index". In addition, in this specification, the term "(meth)acrylic acid" means both "acrylic acid" and "methacrylic acid". Similarly, the term "(meth)acrylate" means both "acrylate" and "methacrylate".

<Ink Composition>

The ink composition according to the present embodiment contains a colorant, a specific solvent component composed of at least one organic solvent having a ClogP value of more than 0.504 and less than 2.635, and water, and a weighted average value obtained by weighting the ClogP value of each organic solvent constituting the specific solvent component by content on mass basis of each organic solvent and averaging the weighted ClogP values is more than 0.67 and less than 1.26. In the following, the components contained in the ink composition according to the present embodiment will be described. It should be noted that each component described below may be used alone or in combination of two or more types thereof.

[Colorant]

For example, a pigment, a disperse dye, a solvent dye, or the like may be used as the colorant. The pigment is exemplified by an inorganic pigment, an organic pigment, and an extender pigment, etc.

Examples of the inorganic pigment include carbon blacks, titanium oxide, metal oxides, metal hydroxides, metal sulfides, metal ferrocyanides, metal chlorides, etc.

When the ink composition is a black ink composition, the inorganic pigment is preferably carbon black such as furnace black, lamp black, acetylene black, or channel black. Examples of commercially available products of the carbon black include: Raven 760 ULTRA, Raven 780 ULTRA, Raven 790 ULTRA, Raven 1060 ULTRA, Raven 1080 ULTRA, Raven 1170, Raven 1190 ULTRA II, Raven 1200, Raven 1250, Raven 1255, Raven 1500, Raven 2000, Raven 2500 ULTRA, Raven 3500, Raven 5000 ULTRA II, Raven 5250, Raven 5750, Raven 7000 (each from Columbia Carbon); Monarch 700, Monarch 800, Monarch 880, Monarch 900, Monarch 1000, Monarch 1100, Monarch 1300, Monarch 1400, Regal 1330R, Regal 1400R, Regal 1660R, Mogul L (each from Cabot Corporation); Color Black FW1, Color Black FW2, Color Black FW2V, Color Black FW200, Color Black S150, Color Black S160, Color Black S170, Printex 35, Printex U, Printex V, Printex 140U, Printex 140V, Special Black 4, Special Black 4A, Special Black 5, Special Black 6, Nerox305, Nerox505, Nerox510, Nerox600, Nerox605, NIPex180IQ, NIPex170IQ, NIPex160IQ, NIPex150IQ (each from Orion Engineered Carbons); MA7, MA8, MA100, MA600, MCF-88, No. 25, No. 33, No. 40, No. 47, No. 52, No. 900, No. 2300 (each from Mitsubishi Chemical Corporation); and the like.

Examples of the organic pigment include pigments of various types including azo, disazo, phthalocyanine, quinacridone, isoindolinone, dioxazine, perylene, perynone, thioindigo, anthraquinone, quinophtharone. Specific examples of the organic pigment include: yellow pigments such as C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 155, 180, 185, 193, 199, 202, and 213; red pigments such as C.I. Pigment Red 5, 7, 12, 48, 48:1, 57, 88, 112, 122, 123, 146, 149, 150, 166, 168, 177, 178, 179, 184, 185, 202, 206, 207, 254, 255, 257, 260, 264, and 272; blue pigments such as C.I. Pigment Blue 1, 2, 3, 15, 15:1, 15:2, 15:3, 15:4, 15:6, 16, 22, 25, 60, 66, and 80; violet pigments such as C.I. Pigment Violet 19, 23, 29, 37, 38, and 50; orange pigments such as C.I. Pigment Orange 13, 16, 68, 69, 71, and 73; green pigments such as C.I. Pigment Green 7, 36, and 54; black pigments such as C.I. Pigment Black 1; and the like.

Examples of the extender pigment include silica, calcium carbonate, talc, clay, barium sulfate, white carbon, etc.

Specific examples of the disperse dye include: yellow dyes such as C.I. Dispers Yellow 3, 4, 5, 7, 9, 13, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 184:1, 182, 183, 184, 186, 192, 198, 199, 201, 202, 204, 210, 211, 215, 216, 218, 224, 231, 232, and 241; orange dyes such as C.I. Dispers Orange 1, 3, 5, 7, 11, 13, 17, 20, 21, 25, 26, 29, 30, 31, 32, 33, 37, 38, 42, 43, 44, 45, 47, 48, 50, 53, 54, 55, 56, 57, 58, 59, 61, 66, 76, 78, 80, 89, 90, 91, 93, 96, 97, 119, 127, 130, 139, and 142; red dyes such as C.I. Dispers Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 289, 298, 302, 303, 310, 311, 312, 320, 324, 328, 343, 362, and 364; violet dyes such as C.I. Dispers Violet 1, 4, 8, 17, 23, 26, 27, 28, 31, 33, 35, 36, 38, 40, 43, 46, 48, 50, 51, 52, 56, 57, 59, 61, 63, 69, and 77; green dyes such as C.I. Dispers Green 6:1, and 9; brown dyes such as C.I. Dispers Brown 1, 2, 4, 9, 13, 19, 26, 27; blue dyes such as C.I. Dispers Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 332, 333, 334, 343, 359, and 360; black dyes such as C.I. Dispers Black 1, 3, 10, and 24; and the like.

Specific examples of the solvent dye include: yellow dyes such as C.I. Solvent Yellow 2, 6, 14, 16, 21, 25, 29, 30, 33, 51, 56, 77, 80, 82, 88, 89, 93, 116, 150, 160:1, 163, and 179; orange dyes such as C.I. Solvent Orange 1, 2, 14, 45, and 60; red dyes such as C.I. Solvent Red 1, 3, 7, 8, 9, 18, 19, 23, 24, 25, 27, 49, 100, 109, 121, 122, 125, 127, 130, 132, 135, 218, 225, and 230; violet dyes such as C.I. Solvent Violet 13, and 31; green dyes such as C.I. Solvent Green 3; brown dyes such as C.I. Solvent Brown 3, and 5; blue dyes such as C.I. Solvent Blue 2, 11, 14, 24, 25, 35, 36, 38, 48, 55, 59, 63, 67, 68, 70, 73, 83, 105, 111, and 132; black dyes such as C.I. Solvent Black 3, 5, 7, 23, 27, 28, 29, and 34; and the like.

The colorant preferably contains a pigment, and more preferably is composed of a pigment from the viewpoint of image fastness such as light-fastness and water-fastness of a recorded image. As the pigment, at least one selected from the group consisting of carbon black; C.I. Pigment Blue 15:3, 15:4; C.I. Pigment Yellow 74, 155; C.I. Pigment Red 122, 150; and C.I. Pigment Violet 19 is preferably used, and at least one selected from the group consisting of carbon black, C.I. Pigment Blue 15:4, C.I. Pigment Yellow 74, C.I. Pigment Red 122, and C.I. Pigment Violet 19 is more preferably used.

The content of the colorant is preferably 0.5 to 30.0% by mass, more preferably 1.0 to 10.0% by mass, still more preferably 2.0 to 7.0% by mass, and particularly preferably 2.0 to 4.8% by mass, based on the total mass of the ink composition.

[Specific Solvent Component]

The specific solvent component is composed of at least one organic solvent having a ClogP value of more than 0.504 and less than 2.635, and a weighted average value obtained by weighting the ClogP value of each organic solvent constituting the specific solvent component by content on mass basis of each organic solvent and averaging the weighted ClogP values is more than 0.67 and less than 1.26.

As used herein, the ClogP value means a logP value (1-octanol/water distribution coefficient) calculated computationally. The ClogP value can be calculated using a fragment method, an atomic approach method, or the like. More specifically, the ClogP value may be calculated using the fragment method described in the literature (C. Hansch and A. Leo, "Substituent Constants for Correlation Analysis in Chemistry and Biology" (John Wiley & Sons, New York, 1969)) or a commercially available software package is used. The ClogP values described herein are those calculated using a commercially available software package, Chem Draw Ultra (CambridgeSoft Corporation, USA). It should be noted that in this specification, the ClogP value and the weighted average value thereof are specified up to the second or third decimal place, and the stated least significant digit at the decimal level is obtained by rounding off the digit one further digit lower than the stated least significant digit at the decimal level.

Examples of the organic solvent constituting the specific solvent component include diethylene glycol diethyl ether (0.52), 1,2-hexanediol (0.53), diethylene glycol monoisobutyl ether (0.54), propyl propylene glycol (0.62), diethylene glycol monobutyl ether (0.67), dipropylene glycol monopropyl ether (0.75), 2,2-diethyl-1,3-propanediol (0.82), propylene glycol monobutyl ether (1.15), diethylene glycol monophenyl ether (1.25), 2-ethyl-1,3-hexanediol (1.26), 1,2-octanediol (1.59), diethylene glycol hexyl ether (1.72), propylene glycol monohexyl ether (2.21), etc. Incidentally, the numerical values in parentheses represent the ClogP value of each organic solvent.

The specific solvent component includes an organic solvent having a ClogP value of preferably more than 0.505 and less than 2.635, more preferably more than 0.520 and less than 2.215, and still more preferably more than 0.530 and less than 1.755.

The weighted average value obtained by weighting the ClogP value of each organic solvent constituting the specific solvent component by content on mass basis of each organic solvent and averaging the weighted ClogP values is preferably 0.68 or more and less than 1.26, more preferably 0.70 or more and less than 1.10, and still more preferably 0.74 or more and less than 1.00.

The weighted average value of the ClogP values can be obtained by summing the ClogP values of the respective organic solvents constituting the specific solvent component multiplied by the contents (part by mass) of the respective organic solvents, and dividing the sum by the content (part by mass) of the specific solvent component.

For example, when organic solvents constituting the specific solvent component are two solvents A and B, a weighted average value Q1 can be obtained according to the following equations (A) to (C).

Content (parts by mass) of solvent A $\times$ ClogP value of solvent A = X          Eq. (A)

Content (parts by mass) of solvent B $\times$ ClogP value of solvent B = Y          Eq. (B)

$$(X+Y)/(\text{content of solvent A} + \text{content of solvent B}) = Q1$$

$$\ldots\text{Eq. (C)}$$

Further, when organic solvents constituting the specific solvent component are three solvents A, B, and C, a weighted average value Q2 can be obtained according to the following equations (A), (B), (D), and (E).

Content (parts by mass) of solvent A $\times$ ClogP value of solvent A = X          Eq. (A)

Content (parts by mass) of solvent B $\times$ ClogP value of solvent B = Y          Eq. (B)

Content (parts by mass) of solvent C $\times$ ClogP value of solvent C = Z          Eq. (D)

(X + Y + Z)/(content of solvent A + content of solvent B + content of solvent C) = Q2          Eq. (E)

It should be noted that when one organic solvent alone constitutes the specific solvent component, the ClogP value of the organic solvent is designated as the weighted average value.

The specific solvent component is preferably composed of two or more organic solvents, and more preferably three or more organic solvents. In addition, the specific solvent component preferably contains at least one selected from the group consisting of 1,2-octanediol, diethylene glycol phenyl ether, and 1,2-hexanediol, more preferably at least two of the above-listed organic solvents, and still more preferably the three above-listed organic solvents, and is particularly preferably composed of the three above-listed organic solvents.

The content of the specific solvent component is preferably 1 to 20% by mass, more preferably 3 to 15% by mass, and still more preferably 5 to 10% by mass, based on the total mass of the ink composition. When the specific solvent component is composed of two or more organic solvents, it is preferable that the contents of at least one pair of solvents in the ink composition satisfy the relationship of "content of solvent having a higher ClogP value < content of solvent having a lower ClogP value".

In this regard, the ink composition according to the present embodiment preferably contain substantially no organic solvent having a ClogP value of 2.635 or more. When substantially no organic solvent having a ClogP value of 2.635 or more is contained, separation of the organic solvent in the ink composition tends to be prevented, leading to improved stability of the ink composition. The content of the organic solvent having a ClogP value of 2.635 or more is preferably less than 1.0 mass %, more preferably less than 0.8 mass %, still more preferably less than 0.5 mass %, and particularly preferably less than 0.2 mass %, based on the total mass of the ink composition.

[Water]

The water is preferably water with less impurities (e.g., metal ions), such as ion-exchanged water and distilled water.

The content of the water is typically 1 to 90% by mass, preferably 5 to 85% by mass, more preferably 10 to 80% by mass, still more preferably 20 to 80% by mass, still more preferably 30 to 80% by mass, and most preferably 50 to 80% by mass, based on the total mass of the ink composition.

[Ink Preparation Agent]

The ink composition according to the present embodiment may further contain an ink preparation agent, in addition to the components described above. Examples of the ink preparation agent include a surfactant, a viscosity modifier, an antifoaming agent, a preservative, a fungicide, a pH adjuster, a chelating reagent, a corrosion inhibitor, a water-soluble UV absorber, a water-soluble polymer compound, a dispersing agent, a resin emulsion, a wax agent, an antioxidant, and the like.

(Surfactant)

Examples of the surfactant include known surfactants such as anionic, cationic, nonionic, amphoteric, silicone, and fluorinated surfactants, and anionic, nonionic, silicone, and fluorinated surfactants are preferred.

Examples of the anionic surfactant include alkyl sulfocarboxylates, α-olefin sulfonates, polyoxyethylene alkyl ether acetates, polyoxyethylene alkyl ether sulfates, N-acyl amino acids or salts thereof, N-acyl-methyltaurine salts, alkyl sulfate polyoxyalkyl ether sulfates, alkyl sulfate polyoxyethylene alkyl ether phosphates, rosin acid soaps, castor oil sulfate ester salts, lauryl alcohol sulfate ester salts, alkylphenol-type phosphate esters, alkyl-type phosphate esters, alkylary lsulfonates, diethyl sulfosuccinates, diethyl hexylsulfosuccinates, dioctyl sulfosuccinates, etc. Examples of commercially available products include HITENOL LA-10, LA-12, LA-16, NEO-HITENOL ECL-30S, ECL-45 (each from DKS Co. Ltd.), and the like.

Examples of the cationic surfactant include 2-vinylpyridine derivatives, poly-4-vinylpyridine derivatives, etc.

Examples of the nonionic surfactant include: ethers such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ether; esters such as polyoxyethylene oleate ester, polyoxyethylene distearate ester, sorbitan laurate, sorbitan monostearate, sorbitan monooleate, sorbitan sesquioleate, polyoxyethylene monooleate, and polyoxyethylene stearate; acetylene glycols (alcohols) such as 2,4,7,9-tetramethyl-5-decyn-4,7-diol, 3,6-dimethyl-4-octyn-3,6-diol, and 3,5-dimethyl-1-hexyn-3-ol; Surfynol 104, 104PG50, 105PG50, 82, 420, 440, 465 and 485, OLFINE STG (each from Nissin Chemical Industry Co., Ltd.); polyglycol ethers (e.g., Tergltol 15-S-7 from SIGMA-ALDRICH, etc.); and the like.

Examples of the amphoteric surfactant include lauryldimethylaminoacetic acid betaine, 2-alkyl-N-carboxymethyl-N-hydroxyethylimidazolinium betaine, palm oil fatty acid amide propyldimethylaminoacetic acid betaine, polyoctylpolyaminoethylglycine, imidazoline derivatives, etc.

Examples of the silicone surfactant include polyether-modified siloxanes, polyether-modified polydimethylsiloxanes, etc. Examples of commercially available products include: BYK-306, BYK-307, BYK-333, BYK-341, BYK-345, BYK-346, BYK-347, BYK-348, BYK-349, BYK-3455 (each from BYK-Chemie GmbH); KF-351A, KF-352A, KF-353, KF-354L, KF-355A, KF-615A, KF-945, KF-640, KF-642, KF-643, KF-6020, X-22-4515, KF-6011, KF-6012, KF-6015, KF-6017 (each from Shin-Etsu Chemical Co., Ltd.); and the like.

Examples of the fluorinated surfactant include perfluoroalkylsulfonic acid compounds, perfluoroalkylcarboxylic acid compounds, perfluoroalkylphosphoric acid ester compounds, perfluoroalkylethylene oxide adducts, polyoxyalkylene ether polymer compounds having a perfluoroalkyl ether group in a side chain thereof, etc. Examples of commercially available products include: Zonyl TBS, FSP, FSA, FSN-100, FSN, FSO-100, FSO, FS-300 (each from DuPont); Capstone FS-30, FS-31, FS-3100 (each from Chemours); PF-151N, PF-154N (each from OMNOVA Solutions); F-114, F-410, F-444, EXP.TF-2066, EXP.TF-2148, EXP.TF-2149, F-430, F-477, F-552, F-553, F-554, F-555, F-556, F-557, F-558. F-559, F-561, F-562, R-40, R-41, RS-72-K, RS-75, RS-76-E, RS-76-NS, RS-77, EXP.TF-1540, EXP.TF-1760 (each from DIC Corporation); BYK-340, BYK-3440, BYK-3441 (each from BYK-Chemie GmbH); and the like.

When the ink composition according to the present embodiment contains a surfactant, the content thereof is typically 0.1 to 3% by mass, and preferably 0.3 to 1% by mass, based on the total mass of the ink composition. When the content of the surfactant is 0.1 to 3% by mass, the dispersion stability of the colorant in the ink composition tends to be improved.

(Viscosity Modifier)

Industrial inkjet printers usually have the predetermined range of the viscosity of ejectable inks based on specifications of a printer head (ink-ejecting head) mounted thereon. Thus, it may be important to add a viscosity modifier to an ink composition to adjust its viscosity to an appropriate range.

The viscosity modifier may be any substance which can adjust the viscosity of the ink composition, and known substances which function as such may be used. Specific examples of the viscosity modifier include organic solvents having a ClogP value of 0.504 or less, and saccharides. Examples of the organic solvent include glycerin (-1.54), triethylene glycol (-1.48), ethylene glycol (-1.37), diethylene glycol (-1.30), propylene glycol (-1.06), 1,2-pentanediol (-0.00), ethylene glycol monoallyl ether (0.03), isopropyl alcohol (0.07), isopropyl glycol (0.09), diethylene glycol ethyl methyl ether (0.13), dipropylene glycol dimethyl ether (0.36), 3-methoxy-3-methyl-1-butanol (0.42), butyl triglycol (0.49), etc. Incidentally, the numerical values in parentheses represent the ClogP value of each organic solvent. In addition, examples of the saccharides include carboxymethyl cellulose, hydroxyethylcellulose, hydroxypropylcellulose, etc.

When the ink composition according to the present embodiment contains a viscosity modifier, the content thereof is typically 1 to 20% by mass, preferably 3 to 20% by mass, more preferably 8 to 18% by mass, still more preferably 10 to 18% by mass, and particularly preferably 12 to 18% by mass, based on the total mass of the ink composition.

(Antifoaming Agent)

Examples of the antifoaming agent include compounds such as silicone compounds, silica mineral oil compounds, olefin compounds, and acetylene compounds. Examples of commercially available products include Surfynol DF37, DF58, DF110D, DF220, MD-20, OLFINE SK-14 (each from Nissin Chemical Industry Co., Ltd.), etc.

(Fungicide)

Examples of the fungicide include sodium dehydroacetate, sodium benzoate, sodium pyridinethione-1-oxide, p-hydroxybenzoic acid ethyl ester, 1,2-benzoisothiazolin-3-one and salts thereof, etc.

(Preservative)

Examples of the preservative include organosulfur compounds, organic nitrogen-sulfur compounds, organic halogen compounds, haloaryl sulfone compounds, iodopropargyl compounds, haloalkylthio compounds, nitrile compounds, pyridine compounds, 8-oxyquinoline compounds, benzothiazole compounds, isothiazoline compounds, dithiol compounds, pyridine oxide compounds, nitropropane compounds, organic tin compounds, phenol compounds, quaternary ammonium salt compounds, triazine compounds, thiazine compounds, anilide compounds, adamantane compounds, dithiocarbamate compounds, brominated indanone compounds, benzyl bromoacetate compounds, and inorganic salt compounds. Specific examples of the organic halogen compound include sodium pentachlorophenol, etc. Specific examples of the pyridine oxide compound include sodium 2-pyridinethiol-1-oxide, etc. Specific examples of the isothiazoline compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, etc. Specific examples of other preservative fungicides include anhydrous sodium acetate, sodium sorbate, sodium benzoate; Proxel GXL(S), Proxel XL-2(S) (each from Arch Chemicals, Inc.), etc.

(PH Adjuster)

Examples of the pH adjuster include: alkanolamines such as diethanolamine, triethanolamine, and N-methyldiethanolamine; hydroxides of alkali metals such as lithium hydroxide, sodium hydroxide, and potassium hydroxide; ammonium hydroxide (aqueous ammonia); carbonates of alkali metals such as lithium carbonate, sodium carbonate, and potassium carbonate; alkali metal salts of organic acids such as potassium acetate; inorganic bases such as disodium phosphate; etc.

(Chelating Reagent)

Examples of the chelating reagent include disodium ethylenediaminetetraacetate, sodium nitrilotriacetate, sodium hydroxyethylethylenediaminetriacetate, sodium diethylenetriaminepentaacetate, sodium uracil diacetate, etc.

(Corrosion Inhibitor)

Examples of the corrosion inhibitor include acid sulfite, sodium thiosulfate, ammonium thioglycolate, diisopropylammonium nitrite, pentaerythritol tetranitrate, dicyclohexylammonium nitrite, etc.

(Water-Soluble UV Absorber)

Examples of the water-soluble UV absorber include sulfonated benzophenone compounds, benzotriazole compounds, salicylic acid compounds, cinnamic acid compounds, triazine compounds, etc.

(Water-Soluble Polymer Compound)

Examples of the water-soluble polymer compound include polyethylene glycol, polyvinyl alcohol, cellulose derivatives, polyamine, polyimine, etc.

(Dispersing Agent)

Examples of the dispersing agent include copolymers composed of at least two types of monomers (preferably, at least one of them being a hydrophilic monomer) selected from monomers such as: styrene and derivatives thereof; vinylnaphthalene and derivatives thereof; aliphatic alcohol esters of $\alpha,\beta$-ethylenically unsaturated carboxylic acids; (meth)acrylic acid and derivatives thereof; maleic acid and derivatives thereof; itaconic acid and derivatives thereof; fumaric acid and derivatives thereof; vinyl acetate, vinyl alcohol, vinylpyrrolidone, acrylamide, and derivatives thereof; etc. Examples of the hydrophilic monomer include monomers that leave a carboxy group after the polymerization thereof, such as (meth)acrylic acid.

Examples of such copolymers include styrene-(meth)acrylic acid copolymers, styrene-(meth)acrylic acid-(meth)acrylic acid ester copolymers, (meth)acrylic acid ester-(meth)acrylic acid copolymers, polyethylene glycol (meth)acrylate-(meth)acrylic acid copolymers, styrene-maleic acid copolymers, etc. Of these, styrene-(meth)acrylic acid copolymers, styrene-(meth)acrylic acid-(meth)acrylic acid ester copolymers, (meth)acrylic acid ester-(meth)acrylic acid copolymers, and polyethylene glycol (meth)acrylate-(meth)acrylic acid copolymers are preferred, and styrene-(meth)acrylic acid copolymers, styrene-(meth)acrylic acid-(meth)acrylic acid ester copolymers, and (meth)acrylic acid ester-(meth)acrylic acid copolymers are more preferred, (meth)acrylic acid ester-(meth)acrylic acid copolymer is still more preferred, and methacrylate ester-methacrylic acid copolymers are particularly preferred. The types of the copolymer include a block copolymer, a random copolymer, a graft copolymer, etc., and a block copolymer is preferred. These copolymers may be in the form of a salt.

The dispersing agent may be synthesized or may be available as a commercial product.

Examples of the dispersing agent available as a commercial product include: Joncryl 62, 67, 68, 678, and 687 (styrene-acrylic copolymer from BASF); Mowinyl S-100A (modified vinyl acetate copolymer from Japan Coating Resin Co., Ltd.); JURYMER AT-210 (polyacrylic acid ester copolymer from Nihon Junyaku Co., Ltd.); and the like.

Examples of the synthetically obtained dispersing agent include an A-B block polymer disclosed in PCT International Publication No. WO 2013/115071. The monomer(s) constituting the A block of the A-B block polymer disclosed in PCT International Publication No. WO 2013/115071 is at least one monomer selected from (meth)acrylic acid, or linear or branched C4-alkyl (meth)acrylate, preferably at least one monomer selected from methacrylic acid or n-butyl methacrylate, and more preferably a combination of these two monomers. In addition, the monomer(s) constituting the B block of the A-B block polymer disclosed in PCT International Publication No. WO 2013/115071 is at least one monomer selected from benzyl methacrylate or benzyl acrylate, and preferably benzyl methacrylate. Specific examples of the A-B block polymer include block copolymers disclosed in Synthesis Examples 3 to 8 of PCT International Publication No. WO 2013/115071.

(Resin Emulsion)

The resin emulsion is not limited as long as it is different from the dispersing agent described above, and examples thereof include emulsions containing a urethane resin, a polyester resin, an acrylic resin, a vinyl acetate resin, a vinyl chloride resin, an acryl-styrene resin, or an acryl-silicone resin. Examples of commercially available products include: SUPERFLEX 126, 150, 170, 210, 420, 470, 820, 830, 860, 890 (each being a urethane resin emulsion from DKS Co. Ltd.); HYDRAN HW-350, HW-178, HW-163, HW-171, AP-20, AP-30, AP-40F, WLS-201, and WLS-210 (each being a urethane resin emulsion from DIC Corporation); 0569, 0850Z, 2108 (each being a styrene-butadiene resin emulsion from JSR Corporation); AE980, AE981A, AE982, AE986B, AE104 (each being an acrylic resin emulsion from Emulsion Technology Co., Ltd.); Saivinol SK-200(acrylic resin emulsion from Saiden Chemical Industry Co., Ltd.); VONCOAT 4001, and 5454 (each being an acrylic resin emulsion from DIC Corporation); and the like.

When the ink composition according to the present embodiment contains a resin emulsion, the content of the solid matter thereof is preferably 0.1 to 10% by mass, more preferably 0.3 to 7% by mass, still more preferably 0.5 to 5% by mass, still more preferably 0.5 to 3% by mass, and most preferably 0.5 to 1.5% by mass, based on the total mass of the ink composition.

(Wax Agent)

The wax agent is preferably a wax emulsion, and more preferably an aqueous wax emulsion. Natural waxes and synthetic waxes may be used as the wax agent. Examples of the natural waxes include: petroleum waxes such as paraffin waxes and microcrystalline waxes; lignite waxes such as montan wax; plant waxes such as carnauba waxes and candelilla waxes; animal and plant waxes such as beeswaxes and lanolins; and the like. Examples of the synthetic waxes include polyalkylene waxes (preferably, poly-C2-C4-alkylene waxes), oxidized polyalkylene waxes (preferably, oxidized poly-C2-C4-alkylene waxes), paraffin waxes, etc. Of these, at least one selected from the group consisting of a polyethylene wax, a polypropylene wax, an oxidized polyethylene wax, an oxidized polypropylene wax, and paraffin waxes is preferred, and an oxidized polyethylene wax is more preferred. The average particle diameter of the wax agent is preferably 50 nm to 5 $\mu$m, and more preferably 100 nm to 1 $\mu$m in order to prevent clogging of an inkjet head. Examples of commercial products of the wax emulsion include AQUACER 515 (acid value: 5 mgKOH/g) from BYK Japan KK and HYTEC E-6500 (acid value: 10 to 20 mgKOH/g) from Toho Chemical Industry Co., Ltd, etc.

When the ink composition according to the present embodiment contains a wax agent, the content of the solid matter thereof is preferably 0.1 to 5% by mass, more preferably 0.2 to 3% by mass, still more preferably 0.5 to 3% by mass, particularly preferably 0.5 to 2% by mass, and most preferably 0.5 to 1.5% by mass, based on the total mass of the ink composition.

(Antioxidant)

Various organic and metal-complex-based anti-fading agents, for example, may be used as the antioxidant. Examples of the organic anti-fading agent include hydroquinones, alkoxyphenols, dialkoxyphenols, phenols, anilines, amines, indanes, chromanes, alkoxyanilines, heterocycles, etc.

[Preparation Method of Ink, etc.]

The preparation method of the ink composition according to the present embodiment is not limited, and any known preparation method may be employed. An exemplary preparation method involves preparing an aqueous dispersion containing a colorant and a dispersing agent, and adding to and mixing with the aqueous dispersion, a specific solvent component, water, and an ink preparation agent, if necessary.

When the ink composition according to the present embodiment is intended for use in inkjet recording, the ink composition is preferably filtered to remove aggregates and the like. Any known filtration method may be appropriately employed for the filtering. An exemplary method involves performing suction filtration using filter paper such as glass filter paper GC-50 (retention particle diameter: 0.5 $\mu$m, from Advantec Toyo Kaisha, Ltd.), glass filter paper GA-100 (retention particle diameter: 1.0 um, from Advantec Toyo Kaisha, Ltd.), or the like.

The ink composition according to the present embodiment is excellent in wetting and spreading on a less ink-absorbent or non-ink-absorbent printing medium, and enables favorable printed matter with large dot diameters to be obtained regardless of the size of a printing gap. In addition, the ink composition according to the present embodiment is excellent in storage stability, redispersibility, various scratch resistances, color developability, and saturation, and is also characterized by less coating unevenness during image formation and excellent image formability. Further, printed images recorded using the ink composition according to the present embodiment are excellent in various aspects of robustness such as water-fastness, light-fastness, heat-fastness, and oxidizing gas resistance (e.g., ozone gas resistance).

<Ink Composition Set>

The ink composition set according to the present embodiment includes the ink composition according to the above-described embodiment and an additional ink composition different from the ink composition. The additional ink composition is not limited as long as it is different in feature from the ink composition according to the present embodiment, and the additional ink composition is preferably different in hue from the ink composition according to the present embodiment.

<Inkjet Recording Method>

The inkjet recording method according to the present embodiment includes ejecting droplets of the ink composition according to the above-described embodiment or each ink composition included in the ink composition set according to the above-described embodiment, and attaching the droplets to a printing medium to form an image.

The printing medium refers to a medium to which an ink composition can adhere, and can be roughly divided into an ink-absorbent printing medium and a less ink-absorbent or non-ink-absorbent printing medium.

Examples of the ink absorbing printing medium include inkjet paper, inkjet film, glossy paper, cardboard, and liner paper contained in cardboard and the like. Specific examples of the liner paper include K liner, C liner, and lightweight liner, etc. commercially available from Oji Materia Co., Ltd., Nippon Paper Industries Co., Ltd., and the like.

Examples of the less ink-absorbent or non-ink-absorbent printing medium include: various types of paper such as coated paper, lightweight coated paper, slightly coated paper, coated cardboard paper, and art paper, which are used for gravure printing, offset printing, and the like; cast coated paper, which is used for label printing; and the like. These printing media are prepared by applying a coating agent to surface-untreated woodfree paper or the like for imparting whiteness or the like, and thus have a coating layer; specific examples thereof include: OK TOPKOTE +, MIRRORKOTE Platina (each from Oji Paper Co., Ltd.); AURORA COAT (from Nippon Paper Industries Co., Ltd.); Pearl Coat (from Mitsubishi Paper Mills Limited); Maricoat (from Hokuetsu Corporation.); RAICHO COAT (from Chuetsu Pulp & Paper Co., Ltd.); and the like.

The inkjet recording method according to the present embodiment preferably uses a printing medium including at least one selected from the group consisting of cardboard, liner paper, coated cardboard, and coated paper. A recording method using a less ink-absorbent or non-ink-absorbent printing medium is also preferred.

When less ink-absorbent or non-ink-absorbent printing medium is used, the printing medium is also preferably subjected to a surface modification treatment for the purpose of, for example, improving the fixability of the colorant.

For the surface modification treatment, at least one treatment selected from the group consisting of corona discharge treatment, plasma treatment, and flame treatment is preferably performed. The surface modification of the printing medium may be performed while appropriately adjusting the number of times of the treatment, the time period of the treatment, the voltage to be applied, and the like so as to achieve a desired effect. The degree of the surface modification can be checked by, for example, measurement of contact angle via any known method. The effect of the surface modification treatment is generally known to be attenuated over time. Accordingly, the printing medium on which the surface modification treatment is performed is preferably subjected to inkjet recording promptly.

An ink nozzle or the like of the inkjet printer used in the inkjet recording method according to the present embodiment is not limited, and may be appropriately selected depending on purpose.

Any known printing technique of inkjet printers may be employed for the printing method described herein. Examples of the printing technique include: a charge controlling technique, which involves ejecting an ink using an electrostatic attractive force; a drop-on-demand technique (pressure pulse technique), which utilizes a vibration pressure of a piezo element; an acoustic inkjet technique, which involves converting an electric signal into an acoustic beam and applying the acoustic beam to an ink, and ejecting the ink using the radiation pressure thereof; a thermal inkjet technique, which involves heating an ink to form air bubbles and utilizing the pressure generated thereupon; and the like. The printing techniques also include a technique that involves improving the fixability of a colorant using a clear and colorless ink, etc. In industrial inkjet printers, single-pass printing using a line head inkjet printer is also preferably performed for the purpose of increasing a printing speed. The ink composition according to the present embodiment enables a printed matter with large dot diameters to be obtained regardless of the size of the printing gap, even under the printing conditions described above.

In printing on a surface of a printing medium by the inkjet recording technique, it is preferable to provide a printing gap of typically 0.5 to 10 mm, preferably 0.75 to 7 mm, more preferably 1 to 5 mm, and still more preferably 1 to 3 mm in order to prevent the contact of the surface of the printing medium with an inkjet head due to warpage of the printing medium, etc.

With respect to all the matters described above, combinations of preferred features are more preferred, and combinations of more preferred features are still more preferred. The same applies to combinations of a preferred feature and a more preferred feature, combinations of a more preferred feature and still more preferred feature, and the like.

EXAMPLES

Hereinafter, the present invention will be described in more detail with reference to Examples, but the present invention is not limited by Examples.

In Examples, "parts" means parts by mass, and "%" means % by mass, unless otherwise specified. The operation of various types of synthesis and the like in Examples was carried out with stirring, unless otherwise specified. The quantification of the pigment solid content in a dispersion, if required, was carried out according to a dry weight method using MS-70 from A&D Company, Limited. The pigment solid content is a converted value obtained by calculating only the pigment solid matter from the total amount of solid matter.

<Preparation Example 1: Preparation of Black Dispersion 1>

A block copolymer (dispersing agent) was obtained by following Synthesis Example 3 of PCT International Publication No. WO 2013/115071. The obtained block copolymer (6 parts) was dissolved in methyl ethyl ketone (20 parts) to obtain a uniform solution. To this solution was added a mixed solution prepared by dissolving sodium hydroxide (0.45 parts) in water (53.55 parts), and then carbon black (Nerox 605, from Orion Engineered Carbons) (20 parts) was added thereto, followed by dispersion treatment in a sand grinder at 1500 rpm for 15 hours to obtain a solution. Water (100 parts) was added to the obtained solution and the mixture was filtered through a glass filter paper GA-100 to remove aggregates and the like, whereby a filtrate was obtained. Methyl ethyl ketone and a part of water in the filtrate were distilled under reduced pressure using an evaporator to obtain black dispersion 1 (Kdp1) having a pigment solid content of 12.0%.

<Preparation Example 2: Preparation of Cyan Dispersion>

A cyan dispersion (Cdp) having a pigment solid content of 12.0% was obtained in the same manner as in Preparation Example 1 except that C.I. Pigment Blue 15:4 (Chromofine blue 4851, from Dainichiseika Color & Chemicals Mfg. Co., Ltd.) was used instead of the carbon black used in Preparation Example 1.

<Preparation Example 3: Preparation of Yellow Dispersion>

A yellow dispersion (Ydp) having a pigment solid content of 12.0% was obtained in the same manner as in Preparation Example 1 except that C.I. Pigment Yellow 74 (HANSA Yellow 5GX01, from Clariant AG) was used instead of the carbon black used in Preparation Example 1.

<Preparation Example 4: Preparation of Magenta Dispersion>

A magenta dispersion (Mdp) having a pigment solid content of 12.0% was obtained in the same manner as in Preparation Example 1 except that C.I. Pigment Red 122 (Inkjet Magenta E02VP2621 from Clariant AG) was used instead of the carbon black used in Preparation Example 1.

<Preparation Example 5: Preparation of Aqueous Joncryl Solution>

A three-neck flask equipped with a condenser was charged with Joncryl 68 (25 parts), triethanolamine (13.3 parts), and ion-exchanged water (61.7 parts), and the temperature thereof was raised to 90°C with stirring at 150 rpm to obtain a solution, whereby an aqueous Joncryl solution containing 25% of Joncryl 68 was obtained.

<Preparation Example 6: Preparation of Black Dispersion 2>

The aqueous Joncryl solution obtained in Preparation Example 5 (15 parts), water (60 parts) and carbon black (NIPex 160IQ, from Orion Engineered Carbons) (25 parts) were mixed, subjected to dispersion treatment in a sand grinder at 1500 rpm for 15 hours, and then filtered through a glass filter paper GA-100 to remove aggregates and the like, whereby a filtrate was obtained. Water was added to the obtained filtrate to obtain a black dispersion 2 (Kdp2) having a pigment solid content of 15.0%.

<Preparation Example 7: Preparation of Resin Emulsion>

A resin emulsion having an acid value of 6 mgKOH/g and a solid content of 25% was prepared by following Preparation Example 4 of PCT International Publication No. WO 2015/147192. This resin emulsion is referred to as "resin 1".

<Examples 1 to 24 and Comparative Examples 1 to 3: Preparation of Ink Compositions>

The components shown in Tables 1 to 4 below were mixed and then filtered through a membrane filter having a pore diameter of 3 μm to obtain ink compositions for evaluation tests.
Abbreviations in Tables 1 to 4 below represent the following components. The numerical values in the row of each component in Tables 1 to 4 below indicate the amount (parts) of the component added, and blank cells indicate no addition of the component.

    Kdp1: black dispersion 1 obtained in Preparation Example 1
    Cdp: cyan dispersion obtained in Preparation Example 2
    Ydp: yellow dispersion obtained in Preparation Example 3
    Mdp: magenta dispersion obtained in Preparation Example 4
    Kbp2: black dispersion 2 obtained in Preparation Example 6
    PG: propylene glycol (ClogP value: -1.06)
    1,2OD: 1,2-octanediol (ClogP value: 1.58)
    DEGHe: diethylene glycol hexyl ether (ClogP value: 1.72)
    DEGPh: diethylene glycol phenyl ether (ClogP value: 1.25)
    1,2HD: 1,2-hexanediol (ClogP value: 0.53)
    EHD: 2-ethyl-1,3-hexanediol (ClogP value: 1.26)
    TEA: triethanolamine
    SF440: Surfynol 440 (from Nissin Chemical Industry Co., Ltd.)
    AQ515: AQUACER 515 (from BYK Japan KK; solid content: 35%)
    Resin 1: resin emulsion obtained in Preparation Example 7
    Water: ion-exchanged water

The weighted average ClogP values in Tables 1 to 4 below are a numerical value of Q1 or Q2 obtained using the equations (A) to (E) described above.

[Table 1]

| | Examples | | | | | | | |
|---|---|---|---|---|---|---|---|---|
| | 1 | 2 | 3 | 4 | 5 | 6 | 7 | 8 |
| Kdp1 | 41.7 | 41.7 | 41.7 | 41.7 | 41.7 | 33.3 | 33.3 | 33.3 |
| Kdp2 | | | | | | | | |
| Cdp | | | | | | | | |
| Mdp | | | | | | | | |
| Ydp | | | | | | | | |
| PG | 12.0 | 10.0 | 10.0 | 7.0 | 6.0 | 15.0 | 10.0 | 10.0 |
| 1,2OD | | 1.0 | 2.0 | 2.0 | 2.0 | 2.0 | 2.0 | 1.0 |
| DEGHe | 1.0 | | | | 1.0 | | | |
| DEGPh | 1.0 | 1.0 | 1.0 | 1.0 | 1.0 | 1.0 | 1.0 | 1.0 |
| 1,2HD | 5.1 | 5.1 | 5.1 | 5.1 | 5.1 | 5.1 | 5.1 | 5.1 |
| SF440 | 0.7 | 0.7 | 0.7 | 0.7 | 0.7 | 0.7 | 0.7 | 0.7 |
| TEA | 0.4 | 0.4 | 0.4 | 0.4 | 0.4 | 0.4 | 0.4 | 0.4 |

(continued)

| | Examples | | | | | | | |
|---|---|---|---|---|---|---|---|---|
| | 1 | 2 | 3 | 4 | 5 | 6 | 7 | 8 |
| Resin 1 | 4.0 | 4.0 | 4.0 | 4.0 | 4.0 | 4.0 | 4.0 | 4.0 |
| AQ515 | 2.1 | 2.1 | 2.1 | 2.1 | 2.1 | 2.1 | 2.1 | 2.1 |
| Water | Balance | | | | | | | |
| Total | 100.0 | 100.0 | 100.0 | 100.0 | 100.0 | 100.0 | 100.0 | 100.0 |
| Weighted average ClogP value | 0.80 | 0.78 | 0.88 | 0.88 | 0.97 | 0.88 | 0.88 | 0.78 |

[Table 2]

| | Examples | | | | | | | |
|---|---|---|---|---|---|---|---|---|
| | 9 | 10 | 11 | 12 | 13 | 14 | 15 | 16 |
| Kdp1 | 37.5 | 37.5 | | 37.5 | 37.5 | | | |
| Kdp2 | | | 30.0 | | | | | |
| Cdp | | | | | | 33.3 | | |
| Mdp | | | | | | | 33.3 | |
| Ydp | | | | | | | | 33.3 |
| PG | 15.0 | 15.0 | 15.0 | 15.0 | 15.0 | 15.0 | 15.0 | 15.0 |
| 1,2OD | 1.0 | 1.0 | 1.0 | 1.0 | 1.0 | 3.0 | 3.0 | 3.0 |
| DEGHe | | | | | | | | |
| DEGPh | 1.0 | | 1.0 | 1.0 | 1.0 | 1.0 | 1.0 | 1.0 |
| 1,2HD | 5.1 | 5.1 | 5.1 | 5.1 | 5.1 | 5.1 | 5.1 | 5.1 |
| SF440 | 0.5 | 0.3 | 0.5 | 0.5 | 0.5 | 0.5 | 0.3 | 0.3 |
| TEA | 0.4 | 0.4 | 0.4 | 0.4 | 0.4 | 0.4 | 0.4 | 0.4 |
| Resin 1 | 4.0 | 4.0 | 4.0 | 12.0 | 4.0 | 4.0 | 4.0 | 4.0 |
| AQ515 | 2.1 | 2.1 | 2.1 | 2.1 | 5.7 | 2.1 | 2.1 | 2.1 |
| Water | Balance | | | | | | | |
| Total | 100.0 | 100.0 | 100.0 | 100.0 | 100.0 | 100.0 | 100.0 | 100.0 |
| Weighted average ClogP value | 0.78 | 0.70 | 0.78 | 0.78 | 0.78 | 0.96 | 0.96 | 0.96 |

[Table 3]

| | Examples | | | | | | | |
|---|---|---|---|---|---|---|---|---|
| | 17 | 18 | 19 | 20 | 21 | 22 | 23 | 24 |
| Kdp1 | 41.7 | 33.3 | 41.7 | 37.5 | 33.3 | 37.5 | 41.7 | 41.7 |
| Kdp2 | | | | | | | | |
| Cdp | | | | | | | | |
| Mdp | | | | | | | | |
| Ydp | | | | | | | | |
| PG | 12.0 | 10.0 | 6.0 | 15.0 | 15.0 | 15.0 | 10.0 | 10.0 |

(continued)

|  | Examples | | | | | | | |
|---|---|---|---|---|---|---|---|---|
|  | 17 | 18 | 19 | 20 | 21 | 22 | 23 | 24 |
| 1,2OD |  | 2.0 | 2.0 | 1.0 | 2.0 | 1.0 | 2.0 | 1.0 |
| DEGHe | 1.0 |  | 1.0 |  |  |  |  |  |
| DEGPh | 1.0 | 1.0 | 1.0 |  | 1.0 | 1.0 | 1.0 | 1.0 |
| 1,2HD | 5.1 | 5.1 | 5.1 | 5.1 | 5.1 | 5.1 | 5.1 | 5.1 |
| SF440 | 0.7 | 0.7 | 0.7 | 0.3 | 0.7 | 0.5 | 0.7 | 0.7 |
| TEA | 0.4 | 0.4 | 0.4 | 0.4 | 0.4 | 0.4 | 0.4 | 0.4 |
| Resin 1 | 1.6 | 6.4 |  |  | 6.4 | 1.6 | 3.2 | 5.2 |
| AQ515 |  |  | 1.1 | 4.6 | 1.1 | 4.6 | 3.7 | 2.3 |
| Water | Balance | | | | | | | |
| Total | 100.0 | 100.0 | 100.0 | 100.0 | 100.0 | 100.0 | 100.0 | 100.0 |
| Weighted average ClogP value | 0.80 | 0.88 | 0.97 | 0.70 | 0.88 | 0.78 | 0.88 | 0.78 |

[Table 4]

|  | Comparative Examples | | |
|---|---|---|---|
|  | 1 | 2 | 3 |
| Kdp1 | 41.7 | 41.7 | 41.7 |
| PG | 16.0 | 14.0 | 12.0 |
| DEGHe | 1.0 |  |  |
| DEGPh | 1.0 | 1.0 | 1.0 |
| 1,2HD |  |  | 5.1 |
| EHD |  | 2.0 |  |
| SF440 | 0.7 | 0.7 | 0.7 |
| TEA | 0.4 | 0.4 | 0.4 |
| Resin 1 | 10.0 | 10.0 | 10.0 |
| AQ515 | 2.9 | 2.9 | 2.9 |
| Water | Balance | | |
| Total | 100.0 | 100.0 | 100.0 |
| Weighted average ClogP value | 1.49 | 1.26 | 0.65 |

<Evaluation>

[Dot Diameter Evaluation Test]

Gradation printing was performed in steps of 1% using each of the ink compositions of Examples and Comparative Examples to obtain a printed image. The printing was performed using a printing jig equipped with two heads of KJ4B, which is an inkjet head from KYOCERA Corporation, and using "OK TOPKOTE +" from Oji Paper Co., Ltd. as a printing medium under the conditions of a frequency of 10 kHz, a binary mode (medium droplet) and printing gaps of 1 mm and 3 mm. The resulting printed image was dried in an IR heater set to 100°C for 3 seconds to obtain a test piece.
The dot diameter in the 2% density portion of the obtained test piece was measured using a printed image evaluation device PIAS-II from QEA, the obtained numerical value was rounding off the decimal places to obtain a value, and the value was used for the evaluation according to the following five evaluation criteria of S to D. The evaluation results are shown in Tables 5 to 7 below.

-Evaluation Criteria-

S: 80 um or more
A: 75 um or more and 79 $\mu$m or less
B: 70 um or more and 74 $\mu$m or less
C: 66 um or more and 69 $\mu$m or less
D: 65 um or less

[Table 5]

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Gap 1 mm | A | S | S | A | A | S | S | S | S | S | S | A |
| Gap 3 mm | B | A | A | A | B | S | S | S | S | S | S | B |

[Table 6]

| | Examples | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| Gap 1 mm | A | S | A | S | S | S | A | S | S | S | S | S |
| Gap 3 mm | B | S | C | S | S | S | B | S | S | A | S | A |

[Table 7]

| | Comparative Examples | | |
|---|---|---|---|
| | 1 | 2 | 3 |
| Gap 1 mm | C | C | C |
| Gap 3 mm | C | D | D |

As shown in Tables 5 to 7, the ink compositions of Examples 1 to 24 resulted in significantly larger dot diameters at least at a gap of 1 mm than the ink compositions of Comparative Examples 1 to 3. In addition, the ink compositions of Examples 1 to 14 and 16 to 24 resulted in larger dot diameters at a gap of 3 mm than the ink compositions of Comparative Examples 1 to 3. It can be seen from these results that the ink compositions of Examples 1 to 24 are excellent in dot diameter performance of printed matter.

## Claims

1. An ink composition comprising a colorant, a specific solvent component composed of at least one organic solvent having a ClogP value of more than 0.504 and less than 2.635, and water,
   wherein a weighted average value obtained by weighting the ClogP value of each organic solvent constituting the specific solvent component by content on mass basis of each organic solvent and averaging the weighted ClogP values is more than 0.67 and less than 1.26.

2. The ink composition according to claim 1, wherein the colorant comprises a pigment.

3. The ink composition according to claim 1, wherein a content of the colorant is 0.5 to 30.0% by mass based on a total mass of the ink composition.

4. An ink composition set comprising the ink composition according to any one of claims 1 to 3, and an additional ink composition different from the ink composition.

5. An inkjet recording method, comprising ejecting droplets of the ink composition according to any one of claims 1 to 3, and attaching the droplets to a printing medium to form an image.

6. The inkjet recording method according to claim 5, wherein the printing medium comprises at least one selected from the group consisting of cardboard, liner paper, coated cardboard, and coated paper.

7. The inkjet recording method according to claim 5, wherein the printing medium is a less ink-absorbent or non-ink-absorbent printing medium.

## INTERNATIONAL SEARCH REPORT

| International application No. |
|---|
| **PCT/JP2022/045244** |

**A. CLASSIFICATION OF SUBJECT MATTER**

*C09D 11/322*(2014.01)i; *B41M 5/00*(2006.01)i; *B41J 2/01*(2006.01)i
FI: C09D11/322; B41M5/00 120; B41J2/01 501

According to International Patent Classification (IPC) or to both national classification and IPC

**B. FIELDS SEARCHED**

Minimum documentation searched (classification system followed by classification symbols)

C09D11/322; B41M5/00; B41J2/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/162270 A1 (NIPPON KAYAKU KK) 13 August 2020 (2020-08-13)<br>example 2 | 1-7 |
| X | JP 2020-125382 A (NIPPON KAYAKU KK) 20 August 2020 (2020-08-20)<br>comparative example 2 | 1-7 |
| X | JP 2017-14443 A (SEIKO EPSON CORP.) 19 January 2017 (2017-01-19)<br>example 4 | 1-7 |
| X | JP 2016-194012 A (SEIKO EPSON CORP.) 17 November 2016 (2016-11-17)<br>example 4 | 1-7 |
| X | JP 2016-160392 A (SEIKO EPSON CORP.) 05 September 2016 (2016-09-05)<br>example 4 | 1-7 |
| X | JP 2016-160391 A (SEIKO EPSON CORP.) 05 September 2016 (2016-09-05)<br>example 5 | 1-7 |
| A | WO 2021/192720 A1 (FUJIFILM CORP.) 30 September 2021 (2021-09-30)<br>entire text, all drawings | 1-7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045244**

| Patent document cited in search report | | | Publication date (day/month/year) | Patent family member(s) | | | Publication date (day/month/year) |
|---|---|---|---|---|---|---|---|
| WO | 2020/162270 | A1 | 13 August 2020 | (Family: none) | | | |
| JP | 2020-125382 | A | 20 August 2020 | (Family: none) | | | |
| JP | 2017-14443 | A | 19 January 2017 | US example 4 | 2017/0009093 | A1 | |
| JP | 2016-194012 | A | 17 November 2016 | US example 4 | 2016/0289460 | A1 | |
| JP | 2016-160392 | A | 05 September 2016 | US example 4 | 2016/0257834 | A1 | |
| JP | 2016-160391 | A | 05 September 2016 | US example 5 | 2016/0257835 | A1 | |
| WO | 2021/192720 | A1 | 30 September 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6640951 B
- JP 6504423 B
- WO 2020054567 A
- WO 2013115071 A
- WO 2015147192 A

**Non-patent literature cited in the description**

- **C. HANSCH ; A. LEO.** Substituent Constants for Correlation Analysis in Chemistry and Biology. John Wiley & Sons, 1969